# EUROPEAN PATENT SPECIFICATION

(11) **EP 4 132 034 B1**
(45) Date of publication and mention of the grant of the patent: **20.05.2026**
(21) Application number: 21189035.5
(22) Date of filing: 02.08.2021
(51) Int. Cl.: H04W 4/70, H04W 4/80, H04W 4/021, H04W 84/18, H04L 12/28, H04L 67/125

(54) **METHOD OF COMMUNICATION WITH HOME DEVICES**
VERFAHREN ZUR KOMMUNIKATION MIT HEIMGERÄTEN
PROCÉDÉ DE COMMUNICATION AVEC DES DISPOSITIFS DOMESTIQUES

(43) Date of publication of application: 08.02.2023
(73) Proprietor: Amica S.A., 64-510 Wronki (PL)
(72) Inventor: RYKOWSKI, Jarogniew, 61-606 Poznan (PL); JENEK, Tomasz, 64-510 Wronki (PL); SWITALA, Wojciech, 32-081 Baranowo (PL)
(74) Representative: Gornicki, Pawel

(56) References cited:
- US-A1- 2016 165 387
- SHIZHU LONG SKYWORTH DIGITAL TECHNOLOGY CO LTD CHINA: "Output - Draft new Recommendation J.pcnp-smgw-arch "The Architecture for Smart Home Gateway" (E-meeting, 2 February 2021);TD-GEN-1028", vol. 6/9, 8 March 2021 (2021-03-08), pages 1 - 15, XP044306442, Retrieved from the Internet <URL:https://www.itu.int/ifa/t/2017/sg9/docs/210419/td/ties/gen/T17-SG09-210419-TD-GEN-1028!!MSW-E.docx> [retrieved on 20210308]
- BRAULIO CABRAL: "Use case possibilities with Bluetooth", vol. 2733, 26 February 2020 (2020-02-26), pages 1 - 16, XP068247286, Retrieved from the Internet <URL:https://ieee-sa.imeetcentral.com/p/aQAAAAAECMmR> [retrieved on 20230722]

## Description

The subject of the invention is a method of communication with home appliances and components of home infrastructure, such as household appliances, audio/video devices or lighting, heating and air-conditioning equipment, in order to check the condition and control these devices in a decentralized manner.

Known solutions for communication and control of home devices use a centralized home network in which the entire network transmission is supervised by a centre, which is most often a specialized router, sometimes a smartphone, or the most advanced, always-on home device, for example, a refrigerator. In a network with such a topology, all data sent over the network must be sent by the central node, and each device must be installed and registered in this node before its first use.

Chinese patent specification CN109218098A discloses a smart home control method, a radio transmission network gateway, and a smart home control system. It is a typical centralized solution that requires installation in the network and registration of each new device and uses the traditional method of addressing the devices. The gateway is the primary authorization centre, but therefore also the primary point that limits the functionality and capacity of the entire network.

Another patent specification CN109088994A discloses a solution in which a smartphone is used to establish a connection with one device equipped with a Bluetooth communication module at a time. The application can transcribe the command given via the graphical or voice interface to the commands sent via Bluetooth to the currently connected home device. The application also acts as a central directory of available devices that must meet very strict requirements as to the type and method of data transmission, which in practice limits the number of such devices only to the list prepared for the purposes of this invention. A serious functional limitation of this system is also that home devices cannot directly exchange any information with each other. The data must be transferred only to and from the smartphone.

The invention described in document CN109981776A concerns a system that solves the problem of the limitations of the classic Bluetooth communication channel, i.e., "exclusive" operation over an established link in this type of transmission. Each device has several Bluetooth transmission modules, the first of which is used to synchronize access to the others. In this way, by establishing connections in the other modules for a while, you can transmit data between any pair of network devices through them. The biggest disadvantage of this solution is the necessity to install many communication modules in each device.

Document CN111585855A discloses a system that uses a smart wireless router integrated with a Wi-Fi module, an infrared module, a ZigBee module, and a Bluetooth module, which enables address communication with any device available through supported forms of communication. The user terminal can thus control the selected smart home device remotely via a smart wireless router. The system does not provide for direct communication between these devices without the use of the above-mentioned router. Document US 2016/165387 discloses a smart home or residential facility, whereby a plurality of devices such as sensors and tags, operating using the Bluetooth Low Energy (BLE) technology, are arranged in mesh formation, whereby with the help of BLE routers and repeaters, and a gateway device comprising both Wi-Fi and BLE means, a remote, cloud-based server can receive BLE broadcasts emanating from the plurality of devices in the BLE mesh network - and issue commands reached to these devices. In addition, a document emtitled "The Architecture for Smart Home Gateway" and a white paper called "Use Case Possibilities with Bluetooth Low Energy in IoT applications", envisage the usage of a gateway device configured to transcode across the REST notation and BLE.

The purpose of the solution, according to the invention, is to provide a method of communication with intelligent home devices via a network without a central point, in which each device is equally privileged, automatic communication between devices is possible without human intervention, and in addition, signals containing digital information formatted in a way to replace addresses with semantic names of functions performed by devices are used for communication.

The purpose has been achieved with the use of a mesh topology network, in which there is a possibility of communication between network components without the need to involve the central unit. In such a network, each network device is equally privileged and can communicate with any other device directly or via any other network component. In addition, selected devices, equipped with alternative communication modules of a different type, in particular connected to the home WiFi network, can be used as input/output gateways for communication outside the mesh network. Transmission in the network takes place in a broadcast mode, in which one network node sends information which is then received by all other nodes.

In the solution, according to the invention, no device is individually addressed, so no central directory is needed, and there is no need to install each new or replaced device or to monitor the device status. The transmitted signals contain digital information formatted in accordance with the REST software architecture style which allows replacement of the addresses with semantic names of functions performed by devices. For each device, you can define any set of functions for which that device will be responsible. The naming of the functions corresponds to the REST resources naming.

A method of communicating with home devices by means of a portable telephone or computer device, in a system in which each home device (Un) is associated with a radio transceiver module (BM), operating in the 2.4 GHz band, using the IEEE 802.15.1 Bluetooth communication standard, or is associated with both a radio transceiver module using the Bluetooth communication standard, as well as with a radio transceiver module operating in the 2.4 GHz, 5 GHz or 6 GHz band, using the IEEE 802.11 WiFi communication standard, and a portable telephone or computer device (S1) is equipped with a transceiver module operating in the 2.4 GHz band, using the IEEE 802.15.1 Bluetooth communication standard, as well as a radio transceiver module (WF), operating in the 2.4 GHz band GHz, 5 GHz or 6 GHz, using the IEEE 802.11 WiFi communication standard, from the WiFi communication standard, which radio transceiver modules (BM) constitute nodes of the BLE Mesh data transmission network, wherein in each node of the BLE Mesh network is running software defining communication between network nodes and between a portable telephone or computer device (S1), characterized in that the radio transceiver module, using the Bluetooth communication standard, transmits in the broadcast mode in the BLE Mesh network, unidirectionally and without acknowledgment, a signal containing digital information in the form of a data frame in accordance with the BLE Mesh standard and formatted in the data part in accordance with the REST rules, which information indicates the REST resource name and the function name and the value of the parameters controlling this resource, the name of REST resource or resources declared for a given radio transceiver module using the Bluetooth communication standard, associated with the home device, identifies the home device in the BLE Mesh network, then in each radio transceiver module using the Bluetooth communication standard which received the transmission, the information is interpreted in terms of compliance with the REST resource list declared for this module, then in the module consistent with the called resource name, the remaining part of the information is interpreted, in the form of a list of parameters of the "name-value" type, where "name" means a command to activate a function, and "value" a parameter of such a command, and then the device functions specified in the information sent are activated and associated with the resource specified in this information, while the home device, additionally associated with the transceiver module using the WiFi communication standard, also receives REST messages from the WiFi network, maps the URL address of this message in such a way that it removes part of the URL responsible for its own address identifying it in the WiFi network, and then the radio transceiver module using the Bluetooth communication standard, associated with this home device, transmits, in the broadcast mode in the BLE Mesh network, a signal that contains the remaining part of information indicating the REST resource name and the list of parameters, while a portable telephone or computer device, equipped with a transceiver module using the Bluetooth communication standard, receives signals from the radio modules associated with home devices, which signals contain digital information formatted according to the REST software architecture style, filters the received digital information according to previously defined user settings, and then processes such information according to previously defined user settings and permissions granted to the user.

Preferably, the telephone or computer device filters the received digital information according to the strength of the received signal or the source of the signal, i.e., the type of home device, its status, or its setting values according to the user settings.

Preferably, the network nodes equipped with BLE and WiFi radio modules automatically translate the REST signals sent in the WiFi network into signals containing digital information in the form of a data frame conforming to the BLE Mesh standard, and formatted in the data part according to the REST rules.

The method of communicating with home devices, according to the invention, eliminates the need to have, maintain and update a REST resource directory associated with the addresses of the network nodes with which these resources are associated. The user does not have to remember the map of redirecting functions to a specific device. The fact that the digital information transmitted in the BLE Mesh network is formatted according to the REST software architecture style facilitates the communication of the BLE Mesh network with the Wi-Fi network, which provides messages in the REST format.

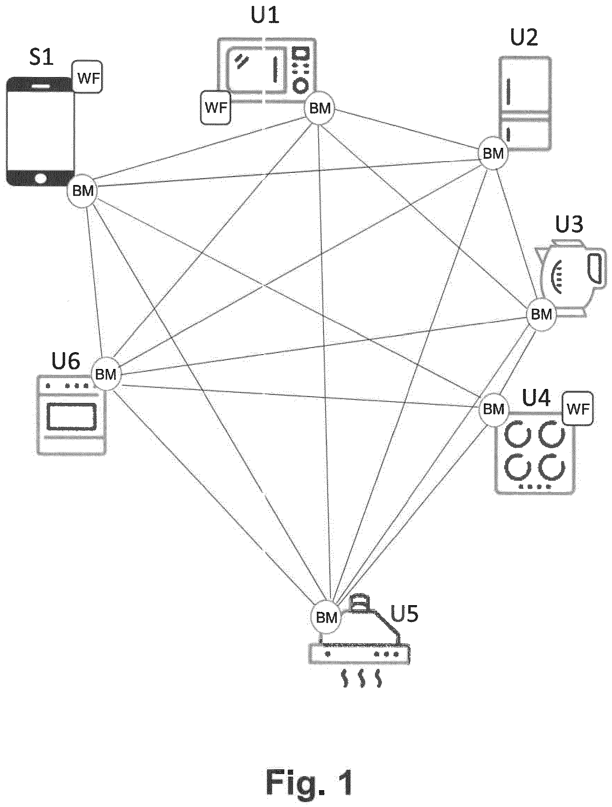

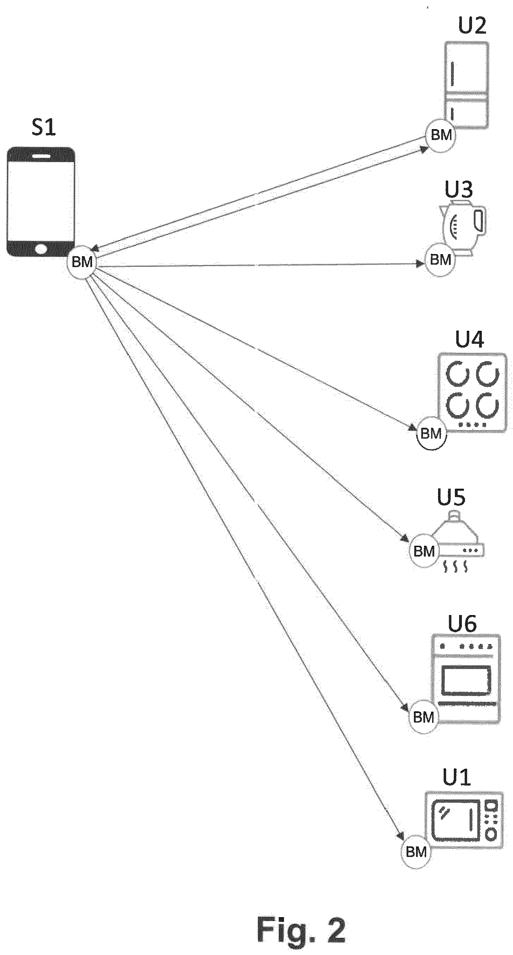

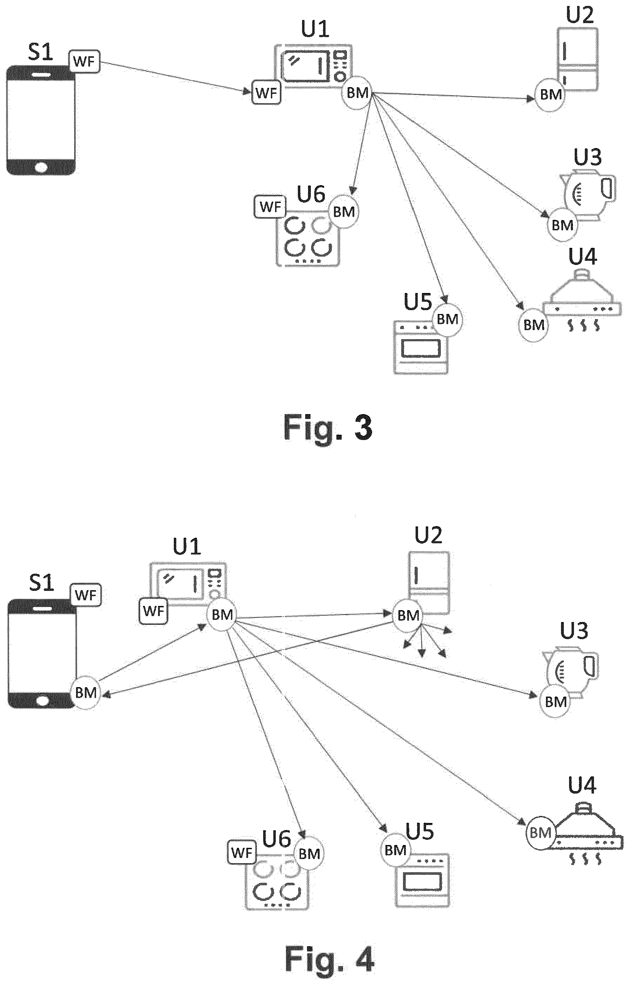

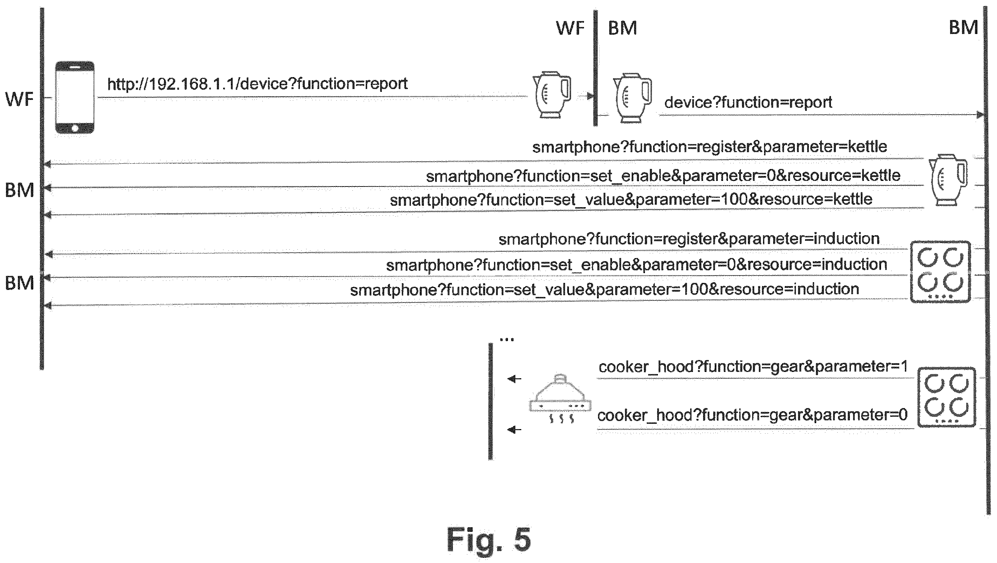

The subject of the invention is explained in more detail in the embodiment shown in the figures, in which Fig. 1 shows an illustrative drawing of the system consisting of home devices and a smartphone, in which the method of communication with these home devices is implemented,, Fig. 2 shows an example of the information flow in the BLE Mesh network in the system shown in Fig. 1, Fig. 3 shows an example of the information flow in which the smartphone sends a message to the BLE Mesh network via the WiFi network, Fig. 4 shows an example of the flow of information sent by the smartphone to the BLE Mesh network via another node of that network, and Fig. 5 shows a diagram illustrating the method of communicating with home devices according to the invention.

An example of a system in which the method of communication with home devices is implemented, shown in Fig.1, consists of a smartphone (S1) equipped with a transceiver module operating in the 2.4 GHz band, using the IEEE 802.15.1 Bluetooth communication standard and the IEEE 802.11 (WiFi) communication standard, and home devices marked with the Un symbol, in which n is the device number. The system shown in Fig. 1 comprises six devices designated U1, U2, U3, U4, U5, and U6, respectively, with each Un device associated with a BLE Mesh BM radio transceiver module operating in the 2.4 GHz band, using the IEEE 802.15.1 Bluetooth communication standard, while the two devices (U1 and U6) are also associated with the WiFi WF radio transceiver module operating in the 2.4 GHz, 5 GHz or 6 GHz band, using the IEEE 802.11 WiFi communication standard. The BM radio modules are nodes of the BLE Mesh data transmission network, with each BM radio module running software that defines the communication between the network nodes and between the S1 smartphone and the human being. The WF radio transceiver modules associated with the U1 and U6 devices run software that interprets the information sent over the WiFi network and automatically translates this information into information compliant with the BLE Mesh standard. In the embodiment, each of the BM and WF radio transceiver modules is powered by the device with which it is associated. The flow of information in this system, where the S1 smartphone sends a signal containing the query for the status of the U2 device via the BLE Mesh network, is shown in Fig. 2. The signal goes to all nodes of the BLE Mesh network, and the software installed in each node of the network checks the compliance of the information contained in the signal with the list of resources declared for a given node. The information sent to the network in the described case is consistent only with the list of resources declared for the node associated with the U2 device, so the feedback signal is sent to the S1 smartphone only from this node. The flow of information when the S1 smartphone communicates with the BM module of the U2 device via the BM module of the U1 device located closest to the S1 smartphone is shown in Fig. 3. The message sent by the S1 smartphone goes to the BM module of the U1 device located closest to the S1 smartphone, which in turn transmits the message in the broadcast mode in the BLE Mesh network, and the message goes to the other network nodes. The BM module of the U2 device, being the addressee of the message sent by the S1 smartphone, sends a return message in the broadcast mode in the BLE Mesh network to all devices equipped with BM transceiver modules including the S1 smartphone. Fig. 4 shows the information flow in the system shown in Fig. 1 when the S1 smartphone sends a signal to the BLE Mesh network via the WiFi network. The S1 smartphone, using the WiFi communication standard, sends a signal addressed to the U1 device. The WF module of the U1 device receives the signal sent in the WiFi network and then transmits this signal via the BM module in the broadcast mode in the BLE Mesh network.

The method of communicating with home devices is explained in more detail in the diagram shown in Fig. 5.

The BM radio transceiver module, associated with the home device, transmits in the broadcast mode in the BLE network ( Bluetooth Low Energy) Mesh, unidirectionally and without acknowledgment, a signal containing digital information formatted according to the REST software architecture style, and receives such signals. The signal containing digital information is in the form of a data frame conforming to the BLE Mesh standard and formatted in the data portion according to the REST rules. The information indicates the name of the REST resource and the names and values of the parameters that control that resource.

In the example shown in Figure 5, the system comprises the following home appliances:
- *kettle* U3, identified by the "kettle" resource and with one function of setting the maximum water temperature, when this temperature is reached, heating is stopped ("temperature" with a parameter in the range of 60..100 degrees);
- *induction cooktop* U6, identified by the "induction" resource and associated with the "power" function, with a parameter in the range of 100..2000W;
- *cooker hood* U4, associated with the name "cooker_hood" and supporting the function of changing the ventilation intensity ("gear") with possible values of "0", "1" and "2".

The "device" resource with the two following functions is additionally assigned to each device U3, U4, and U6:
- the "enable" function that interprets the parameters "0" and "1" indicating the device activity status (working / sleep mode),
- the "report" function, without parameters.

Therefore, there are three nodes and six resources in the BLE Mesh network. The three resources are uniquely named ("kettle", "induction cooktop", "cooker_hood"), and the three resources have the same name ("device"). Additionally, the U3 network node corresponding to the kettle is equipped with a WiFi communication module, which enables connecting to a home WiFi access point. The IP address 192.168.1.1 is assigned to this node in the local network. The fourth node of the network is the S1 smartphone, equipped with a BLE transmission module and an application enabling connection to the BLE Mesh network.

This node is associated with the "smartphone" resource and has the following device directory functions: "register" with the parameter that is the name of the resource associated with the device being registered, and "set_enable" and "set_value" with the indication of the current status of each device.

Via the WiFi network, the smartphone sends a signal to the IP address of the node associated with the U3 kettle, containing a query about the status of all devices, in the following form:
http://192.168.1.1/device?function=report

The WF module associated with the kettle maps the URL of this message in such a way that it removes from the URL the protocol name and address that identify the WF module associated with the U3 kettle in the WiFi network, and then it sends the rest of the information containing the REST "device" resource identification and parameter list "function = report" in the broadcast mode in the BLE Mesh network. In this way, the information goes to the other devices associated with the BM transceiver modules. The information sent to the BLE Mesh network is as follows:
device?function=report

In the example of the system, each node is associated with a resource named "device", so the message is accepted by all nodes of the BLE Mesh network, and each of them interprets the data provided in the message and then sends back three pieces of information to the network, directed to the S1 smartphone node:
smartphone?function=register&parameter=NNN
where NNN is the name of the resource uniquely assigned to the node, e.g., U3 kettle, and the messages recording its current status:
   smartphone?function=set_enable&parameter=X&resource=NNN
where X is the status ("0" / "1" depending on whether the device is active or not) and NNN is the resource name, as in the previous message, and:
   smartphone?function=set_value&parameter=Y&resource=NNN
where Y is the value of a parameter associated with a unique device resource, e.g., "temperature" in the case of the U3 kettle device.

The S1 smartphone, after receiving messages from all U3, U4, U5 devices, creates a temporary directory indicating all devices currently available in the network and describing their current status. The user selects the device to control from the directory and determines the function to be performed. For example, the user intends to heat water to make green tea, so he sends a signal in the broadcast mode in the BLE Mesh network containing information in the following form:

```
kettle?function=temperature&parameter=80
      kettle?function=enable&parameter=1
```

The commands do not necessarily have to be initiated by the S1 "smartphone" node, that is, under the user control. The network may also work automatically. For example, an enabled induction cooktop, after reaching the frying temperature above 140°C, sends a command to turn on the cooker hood fan to the lowest gear:
cooker_hood?function=gear&parameter=1

When the temperature exceeds 180°C, the induction cooktop may require more ventilation:
cooker_hood?function=gear&parameter=2

The induction cooktop, after it has been turned off and cooled down, turns off the ventilation by sending the following command in the BLE Mesh network:
cooker_hood?function=gear&parameter=0

The devices associated with the network nodes do not have any information about the other devices on the network, including whether the device is active on the network or not. A message with a command sent by a device to an inactive device on the network does not affect the operation of the device sending the command. In the embodiment of the invention described above, the induction cooktop will not stop cooking if the cooker hood does not turn on, but if the cooker hood is active on the network, it will start automatically.

The devices on the network are identified only by the name of the currently assigned resource and the set of functions assigned to that resource. The address or location of the device is not required for communication among devices connected to the network. The device cooperation can be programmed by placing appropriate REST messages in the device microcontroller code. Replacement of one device model with another will not require reprogramming these microcontrollers, and the network as a whole will work the same despite the changes.

## Claims

1. A method of communicating with home devices by means of a portable telephone or computer device, in a system in which each home device (Un) is associated with a radio transceiver module (BM), operating in the 2.4 GHz band, using the IEEE 802.15.1 Bluetooth communication standard, or is associated with both a radio transceiver module using the Bluetooth communication standard, as well as with a radio transceiver module operating in the 2.4 GHz, 5 GHz or 6 GHz band, using the IEEE 802.11 WiFi communication standard, and a portable telephone or computer device (S1) is equipped with a transceiver module operating in the 2.4 GHz band, using the IEEE 802.15.1 Bluetooth communication standard, as well as a radio transceiver module (WF), operating in the 2.4 GHz band GHz, 5 GHz or 6 GHz, using the IEEE 802.11 WiFi communication standard, from the WiFi communication standard, which radio transceiver modules (BM) constitute nodes of the BLE Mesh data transmission network, wherein in each node of the BLE Mesh network is running software defining communication between network nodes and between a portable telephone or computer device (S1), **characterized in that** the radio transceiver module (BM), using the Bluetooth communication standard, transmits in the broadcast mode in the BLE Mesh network, unidirectionally and without acknowledgment, a signal containing digital information in the form of a data frame in accordance with the BLE Mesh standard and formatted in the data part in accordance with the REST rules, which information indicates the REST resource name and the function name and the value of the parameters controlling this resource, the name of REST resource or resources declared for a given radio transceiver module (BM), associated with the home device (Un), identifies the home device in the BLE Mesh network, then in each BM module which received the transmission, the information is interpreted in terms of compliance with the REST resource list declared for this BM module, then in the BM module consistent with the called resource name, the remaining part of the information is interpreted, in the form of a list of parameters of the "name-value" type, where "name" means a command to activate a function, and "value" a parameter of such a command, and then the functions of the device (Un) specified in the information sent are activated and associated with the resource specified in this information, while the home device (Un), additionally associated with the transceiver module (WF) using the WiFi communication standard, also receives REST messages from the WiFi network, maps the URL address of this message in such a way that it removes part of the URL responsible for its own address identifying it in the WiFi network, and then the radio transceiver module (BM) using the Bluetooth communication standard, associated with this home device (Un), transmits, in the broadcast mode in the BLE Mesh network, a signal that contains the remaining part of information indicating the REST resource name and the list of parameters, while a portable telephone or computer device (S1), equipped with a transceiver module using the Bluetooth communication standard, receives signals from the radio transceiver modules (BM) associated with home devices (Un), which signals contain digital information formatted according to the REST software architecture style, filters the received digital information according to previously defined user settings, and then processes such information according to previously defined user settings and permissions granted to the user.

2. The method according to claim 1, **characterized in that** the telephone or computer device (S1) filters the received digital information according to the strength of the received signal or the source of the signal, i.e., the type of home device (Un), its status or its setting values according to the user settings.

3. The method according to claim 4, 1, **characterized in that** in the network node where the home device (Un) is associated with both the radio transceiver module (BM) using the Bluetooth communication standard as well as the radio transceiver module (WF) using the WiFi communication standard, the REST signals sent in the WiFi network are automatically translated into signals containing digital information in the form of a data frame conforming to the BLE Mesh standard and formatted in the data part according to the REST rules.

## Patentansprüche

1. Ein Verfahren zur Kommunikation mit Heimgeräten mittels eines tragbaren Telefons oder Computers in einem System, in dem jedes Heimgerät (Un) mit einem Funk-Transceiver-Modul (BM) verbunden ist, das im 2,4-GHz-Band arbeitet und den Bluetooth-Kommunikationsstandard IEEE 802.15. 1 verwendet, oder sowohl mit einem Funk-Transceiver-Modul, das den Bluetooth-Kommunikationsstandard verwendet, als auch mit einem Funk-Transceiver-Modul, das im 2,4-GHz-, 5-GHz- oder 6-GHz-Band arbeitet und den WiFi-Kommunikationsstandard IEEE 802.11 verwendet, verbunden ist, und ein tragbares Telefon oder Computergerät (S1) mit einem Transceiver-Modul ausgestattet ist, das im 2,4-GHz-Band arbeitet und den Bluetooth-Kommunikationsstandard IEEE 802.15.1 verwendet, sowie mit einem Funk-Transceiver-Modul (WF), das im 2,4-GHz-, 5-GHz- oder 6-GHz-Band arbeitet und den WiFi-Kommunikationsstandard IEEE 802.11 verwendet, wobei die Funk-Transceiver-Module (BM) Knoten des BLE-Mesh-Datenübertragungsnetzwerks bilden, wobei in jedem Knoten des BLE-Mesh-Netzwerks eine Software läuft, die die Kommunikation zwischen Netzwerkknoten und zwischen einem tragbaren Telefon oder Computergerät (S1) definiert, **dadurch gekennzeichnet, dass** das Funk-Transceiver-Modul (BM) unter Verwendung des Bluetooth-Kommunikationsstandards im Broadcast-Modus im BLE-Mesh-Netzwerk unidirektional und ohne Bestätigung ein Signal sendet, das digitale Informationen in Form eines Datenrahmens gemäß dem BLE-Mesh-Standard enthält und im Datenteil gemäß den REST-Regeln formatiert ist, wobei diese Informationen den Namen der REST-Ressource und den Funktionsnamen sowie den Wert der Parameter angeben, die diese Ressource steuern, den Namen der REST-Ressource oder der Ressourcen, die für ein bestimmtes Funk-Transceiver-Modul (BM) deklariert sind, das mit dem Heimgerät (Un) verbunden ist, das Heimgerät im BLE-Mesh-Netzwerk identifiziert, dann in jedem BM-Modul, das die Übertragung empfangen hat, die Information im Hinblick auf die Übereinstimmung mit der für dieses BM-Modul deklarierten REST-Ressourcenliste interpretiert, dann im BM-Modul, das mit dem aufgerufenen Ressourcennamen übereinstimmt, den verbleibenden Teil der Informationen in Form einer Liste von Parametern vom Typ "Name-Wert" interpretiert, wobei "Name" einen Befehl zur Aktivierung einer Funktion und "Wert" einen Parameter eines solchen Befehls bedeutet, interpretiert, und dann die in den gesendeten Informationen angegebenen Funktionen des Geräts (Un) aktiviert und mit der in diesen Informationen angegebenen Ressource verbindet, während das Heimgerät (Un), das zusätzlich mit dem Transceiver-Modul (WF) unter Verwendung des WiFi-Kommunikationsstandards verbunden ist, ebenfalls REST-Nachrichten vom WiFi-Netzwerk empfängt, die URL-Adresse dieser Nachricht so zuordnet, dass es den Teil der URL entfernt, der für seine eigene Adresse verantwortlich ist und es im WiFi-Netzwerk identifiziert, und dann das Funk-Transceiver-Modul (BM) unter Verwendung des Bluetooth-Kommunikationsstandards, das mit diesem Heimgerät (Un) verbunden ist, im Broadcast-Modus im BLE-Mesh-Netzwerk ein Signal, das den verbleibenden Teil der Informationen enthält, der den Namen der REST-Ressource und die Liste der Parameter angibt, während ein mit einem Transceiver-Modul ausgestattetes Mobiltelefon oder Computergerät (S1), das den Bluetooth-Kommunikationsstandard verwendet, Signale von den mit den Funk-Transceiver-Modulen (BM) verbundenen Heimgeräten (Un) empfängt, wobei diese Signale digitale Informationen enthalten, die gemäß dem REST-Softwarearchitekturstil formatiert sind, die empfangenen digitalen Informationen gemäß zuvor definierten Benutzereinstellungen filtert und diese Informationen dann gemäß zuvor definierten Benutzereinstellungen und dem Benutzer gewährten Berechtigungen verarbeitet.

2. Das Verfahren nach Anspruch 1, **dadurch gekennzeichnet, dass** das Telefon oder Computergerät (S1) die empfangenen digitalen Informationen entsprechend der Stärke des empfangenen Signals oder der Quelle des Signals, d. h. dem Typ des Heimgeräts (Un), seinem Status oder seinen Einstellwerten gemäß den Benutzereinstellungen filtert.

3. Das Verfahren gemäß Anspruch 1, **dadurch gekennzeichnet, dass** in dem Netzwerkknoten, in dem das Heimgerät (Un) sowohl mit dem Funk-Transceiver-Modul (BM) unter Verwendung des Bluetooth-Kommunikationsstandards als auch mit dem Funk-Transceiver-Modul (WF) unter Verwendung des WiFi-Kommunikationsstandards verbunden ist, die im WiFi-Netzwerk gesendeten REST-Signale automatisch in Signale übersetzt werden, die digitale Informationen in Form eines Datenrahmens enthalten, der dem BLE-Mesh-Standard entspricht und im Datenteil gemäß den REST-Regeln formatiert ist.

## Revendications

1. Procédé de communication avec des dispositifs domestiques au moyen d'un téléphone portable ou d'un ordinateur, dans un système où chaque dispositif domestique (Un) est associé avec un module radio émetteur-récepteur (BM), fonctionnant dans la bande 2.4 GHz, utilisant le standard de communication Bluetooth IEEE 802.15.1, ou est connecté à la fois avec un module radio émetteur-récepteur utilisant le standard de communication Bluetooth et avec un module radio émetteur-récepteur fonctionnant dans la bande 2.4 GHz, 5 GHz ou 6 GHz, utilisant le standard de communication WiFi IEEE 802.11, et le le téléphone portable ou l'ordinateur (S1) est équipé d'un module radio émetteur-récepteur (BM), fonctionnant dans la bande 2.4 GHz, utilisant le standard de communication Bluetooth IEEE 802.15.1, ainsi que d'un module radio émetteur-récepteur (WF), fonctionnant dans la bande 2.4 GHz GHz, 5 GHz ou 6 GHz, utilisant le standard de communication WiFi IEEE 802.11, du standard de communication WiFi, les modules radio émetteur-récepteur (BM) constituant des nœuds du réseau de transmission des données BLE Mesh, où dans chaque nœud du réseau BLE Mesh est utilisé un logiciel définissant la communication entre les nœuds du réseau et le téléphone portable ou l'ordinateur (S1), **caractérisé en ce que** le module radio émetteur-récepteur (BM), utilisant le standard de communication Bluetooth, transmet en mode de diffusion dans le réseau BLE Mesh, de manière unidirectionnelle et sans confirmation, un signal contenant une information numérique sous forme d'une trame de données conformément au standard BLE Mesh et formaté dans la partie des données conformément aux règles REST, l'information indiquant le nom de la ressource REST et le nom de la fonction et la valeur des paramètres commandant cette ressource, le nom de la ressource REST ou des ressources déclarées pour un module radio émetteur-récepteur (BM) donné, associé au dispositif domestique (Un), identifiant le dispositif domestique dans le réseau BLE Mesh, puis dans chaque module BM ayant reçu la transmission, l'information est interprétée au niveau de la conformité avec la liste de ressources REST déclarée pour ce module BM, ensuite dans le module BM conforme au nom de la ressource appelée, la partie restante de l'information est interprétée, sous forme d'une liste de paramètres du type "nom-valeur", où "nom" signifie une commande activant une fonction, et "valeur" le paramètre d'une telle commande, et ensuite les fonctions du dispositif (Un) définies dans l'information envoyée sont activées et associées aux ressources spécifiées dans l'information, tandis que le dispositif domestique (Un), de plus associé avec le module émetteur-récepteur (WF) utilisant le standard de communication WiFi, reçoit également les messages REST du réseau WiFi, trace l'adresse URL du message d'une façon telle qu'il supprime la partie de l'URL responsable de sa propre adresse en l'identifiant dans le réseau WiFi, et ensuite le module radio émetteur-récepteur (BM) utilisant le standard de communication Bluetooth associé avec le dispositif domestique (Un) donné, transmet, en mode de diffusion dans le réseau BLE Mesh, un signal comportant la partie restante de l'information indiquant le nom de la ressource REST et la liste des paramètres, tandis qu'un téléphone portable ou un ordinateur (S1), équipé d'un module émetteur-récepteur utilisant le standard de communication Bluetooth, reçoit des signaux des modules radio émetteur-récepteur (BM) associés avec les dispositifs domestiques (Un), ces signaux comportant une information numérique formatée conformément à l'architecture logicielle REST, filtre l'information numérique reçue conformément aux réglages prédéfinis de l'utilisateur, et ensuite traite une telle information conformément aux réglages prédéfinis de l'utilisateur et aux autorisations accordées à l'utilisateur.

2. Le procédé selon la revendication 1, **caractérisé en ce que** le téléphone ou l'ordinateur (S1) filtre l'information numérique reçue selon la puissance du signal reçu ou de la source du signal, c'est-à-dire le type de dispositif domestique (Un), son statut ou ses valeurs de réglages selon les réglages de l'utilisateur.

3. Le procédé selon la revendication 1, **caractérisé en ce que,** dans le nœud du réseau où le dispositif domestique (Un) est associé à la fois au module radio émetteur-récepteur (BM) utilisant un standard de communication Bluetooth et au module radio émetteur-récepteur (WF) utilisant le standard de communication WiFi, les signaux REST envoyés dans le réseau WiFi sont automatiquement convertis en signaux contenant une information digitale sous la forme d'une trame de données conforme au standard BLE Mesh et formatés dans la partie des données selon les règles REST.
